# EUROPEAN PATENT APPLICATION

(11) **EP 2 098 731 A2**
(43) Date of publication of application: **09.09.2009**
(21) Application number: 09154569.9
(22) Date of filing: 06.03.2009
(51) Int. Cl.: F04D 9/00, F04D 13/06, F04D 15/02

(54) **Condensate pump**

(30) Priority: 07.03.2008 US 44641
(71) Applicant: Little Giant Pump Company, Oklahoma City OK 73112 (US)
(72) Inventor: Currier, Jon, Edmond,, OK 73012 (US)
(74) Representative: Hamer, Christopher K.

(57) **Abstract**

A condensate pump that provides a ventilation system that efficiently expels warm air surrounding a pump motor is disclosed. The pump has a motor-driven fan, a cover that encloses the fan, and a ventilation opening that allows for air to enter through the cover. The cover has an exhaust opening adjacent to the fan and a discharge outlet. The space between the exhaust opening and the discharge outlet defines a throat. A cutwater is adjacent to the exhaust opening for focusing air outward through the throat and expelling it from the cover through the discharge outlet.

## Description

### FIELD OF THE INVENTION

This invention relates to an improved condensate pump that employs a fan and volute casing to expel air surrounding a pump motor to provide an improved cooling effect.

### BACKGROUND OF THE INVENTION

Condensate may be produced in an HVAC (heating or cooling) or refrigeration system. Some examples include high-efficiency furnaces, which extract so much heat from exhaust gases that water vapor in the exhaust condenses, or air conditioning units, where condensate is produced when moist air contacts cold evaporator coils. It is known to provide a condensate pump to discharge the condensate produced in these systems. Condensate generated from latent water vapor must be collected and discarded to avoid damage to the heating/cooling unit and to prevent this contaminant from entering the surrounding environment.

Condensate pumps are typically centrifugal pumps, which consist of a set of rotating vanes, enclosed within a housing or casing and used to impart energy to a fluid through centrifugal force. An impeller contained within a volute casing at the bottom of the pump provides necessary pumping action of the condensate pump. This impeller is usually connected to an electric motor via a shaft that extends downwards from the motor, which is mounted above the tank where the condensate accumulates. The condensate fluid to be pumped passes along a flow path extending from a central inlet to the impeller, whereby the fluid is expelled at a high rate centrifugally outward against the surrounding casing which opens to a volute throat leading to a pump discharge outlet.

The electric motor of a condensate pump needs to be cooled during operation. Most pumps use a fan mounted above the motor to effect an air current directioned to cool the motor. One type of cooling system for condensate pump motor is known from U.S. Patent No. 6.322,326 (Davis et al.). In that device, the modular condensate pump assembly employs a turbine air fan supported on an upper end of a drive shaft. The cover surrounding the fan contains a plurality of air inlet slots at a base of the cover, and a plurality of long, vertical air outlet slots on each of three sides of the cover, to facilitate air ventilation and cool the electric motor. While the warmed air is expelled on three sides of the cover containing air outlet slots, this exiting air flow is somewhat random. Thus one must reduce the power output of the motor, and thus reduce the output of the pump, in order not to decrease motor life.

The condensate pump motor is often triggered automatically by a main float disposed in the tank, where condensate liquid is collected. *Davis et al*. discloses a float in the collection tank of a condensate pump that provides a two position mechanical level control, When condensate reaches an upper level in the tank, the float rises to a first start position to engage a micro-switch, thereby activating the motor to discharge the liquid. When the condensate subsequently returns below a lower level, the float falls to a stop position, triggering the micro-switch again, this time to deactivate the motor. Since this float is only activated when condensate reaches a specified upper level, a user will be unable to expel condensate at an carlier time. An option of activating the float prior to condensate reaching the specified upper level may be useful to test the operability of the float, or to simply pump out remaining contents in the collection tank.

Thus, there is a need for a condensate pump that provides a ventilation system that more efficiently expels the warm air surrounding the pump motor. In addition, there is a need for a main float that is accessible from outside the pump housing, such that a user may directly engage the switch and activate the pump motor at any time.

### BRIEF DESCRIPTION OF THE DRAWINGS

**FIG. 1** illustrates a perspective view of a condensate pump and a partial cutaway perspective view of the pump housing, in accordance with the present invention.

**FIG. 2** illustrates a cross-sectional top view of the condensate pump of **FIG. 1****.**

**FIG. 3** illustrates a perspective cross-sectional bottom view of the condensate pump of FIG. 1.

**FIG. 4** illustrates a perspective, exploded view of all components contained within the condensate pump of **FIG. 1****.**

**FIG. 5** illustrates a perspective view of an improved float, in accordance with the present invention.

**FIG. 6A** illustrates a front view of a manual float activation device of the float of **FIG. 5****.** before the float is raised.

**FIG. 6B** illustrates a front view of a manual float activation device of the float of **FIG. 5**. after the float is raised.

### DETAILED DESCRIPTION OF A PREFERRED EMBODIMENT

While this invention is susceptible to embodiments in many different forms, there is shown in the drawings and will herein be described in detail, a preferred embodiment of the invention with the understanding that the present disclosure is to be considered as an exemplification of the principles of the invention and is not intended to limit the broad aspect of the invention to the embodiment illustrated.

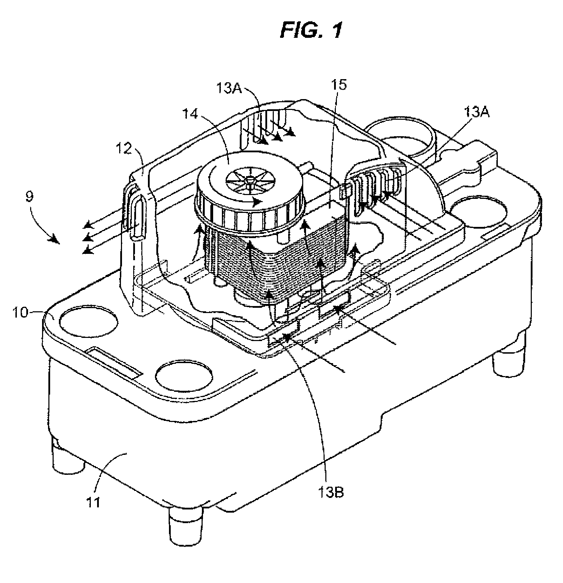

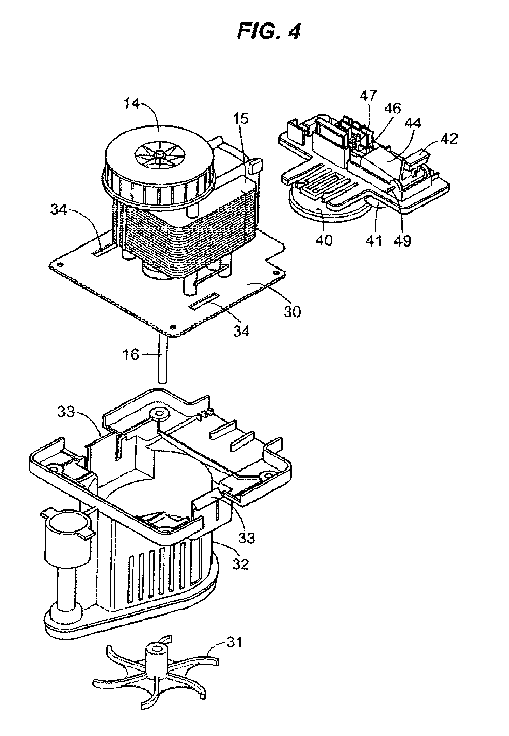

Referring to the drawings in general and in particular to FIG. 1, shown therein is an improved condensate pump 9. The condensate pump includes a pump housing 10 supported on a collection tank 11. The pump housing 10 includes an upwardly extending cover 12. The cover 12 includes inlet opening(s) 13A and 13B, which are preferably positioned on side walls of the cover 12 and at the base of the cover 12, respectively. The cover 12 encloses several components, including a cooling fan 14 and a motor 15. The cooling fan 14 is supported and driven by a shaft 16 (FIG. 4), which is driven by the motor 15. The collection tank 11 is used to collect condensate liquid.

As the cooling fan 14 rotates, air enters into the pump housing 10 through the inlet opening(s) 13A and 13B. Air flow is represented by solid arrows in FIGS. 1-3. While air flow in most of the inlet opening(s) 13A are directioned inward (i.e. toward the inside of the cover 12), air flow in those inlet opening(s) 13A furthest from the fan 14 may be more randomdirectioned both inward and outward. The cooling fan 14, when rotated by the motor 15, creates a low-pressure area that causes air to be drawn into the pump housing 10. Specifically, the rotating fan 14 draws the air through inlet opening(s) 13A and 13B, into the center of the fan 14, and then pushes the air out in a radial and tangential direction by a centrifugal force. Also, the air surrounding the motor 15, which has been warmed due to the operation of the motor 15, is similarly drawn into the fan 14 and then spun out.

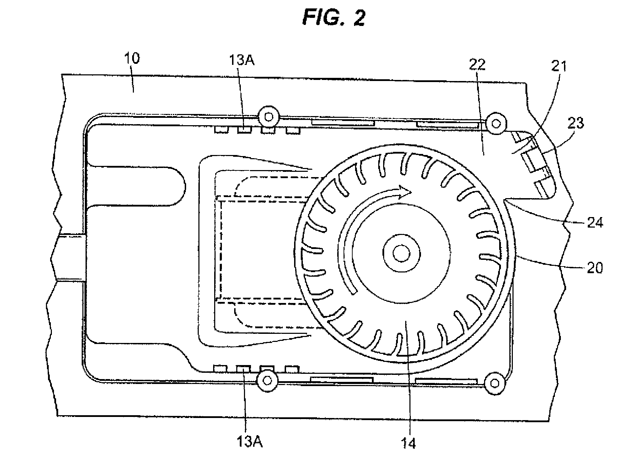

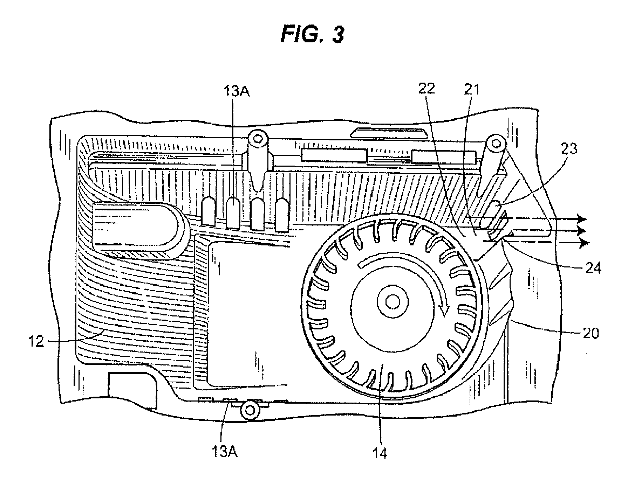

Turning to FIGS. 2 and 3, an inner circular portion 20 is a part of the cover 12 that is shaped around the fan 14. The interior circular portion 20 is sized to fit right around the Fan 14, such that it has an inner radius that is only slightly greater than the radius of the fan 14. Preferably, the inner circular portion 20 is shaped around at least 90 degrees of the fan 14. A throat 21 is typically a nozzle portion of the cover 12, and located on the opposite side of the fan 14 as the inlet opening(s) 13A. The throat 21 is the space defined between an exhaust opening 22 and a discharge outlet 23. The exhaust opening 22 is the entrance to the throat 21. The discharge outlet 23 is angled relative to the walls of the cover 12 that define the throat 21, A cutwater 24 is adjacent to the exhaust opening 22, and is the wall that divides the throat 21 from the inner circular portion 20. Thus, the cutwater 24 defines an end of the inner circular portion 20. The cutwater 24 is a design feature typically found in the volute casing of a centrifugal pump, where it is referred to as either the "cutwater" or the "tongue of the volute."

Once the air is pushed out of the fan 14 with a certain velocity, its kinetic energy is converted to pressure energy by means of the resistance to air flow provided by the cover 12. The part of the cover 12 that is most responsible for this energy conversion is the inner circular portion 20. The inner circular portion 20 functions as a volute casing and is responsible for efficiently directing air flow and subsequently expelling it. Air flow is expelled by being directed towards the exhaust opening 22. through the throat 21, and then exiting through the discharge outlet 23. Due to the conversion into pressure energy, and the lower pressure environment within the open space provided by the throat 21, air exits rapidly through the discharge outlet 23.

As depicted in FIG. 4, the motor 15 is attached to the motor plate 30. The shaft 16 extends from the motor 15 and through the motor plate 30. An impeller 31 is disposed inside a volute casing 32, which is contained inside the collection tank 11. The volute casing 32 is removably connectable to the motor plate 30 via at least one hook 33, which is inserted and attaches to at least one slit 34 on the motor plate 30. Preferably there are two or more hooks 33 that attach to corresponding slits 34 on opposite sides of the motor plate 30 to adequately support the volute casing 32. The upper end of the shaft 16 supports and drives the fan 14, while the lower end of the shaft 16 supports and drives the impeller 31 that expels the stored condensate liquid.

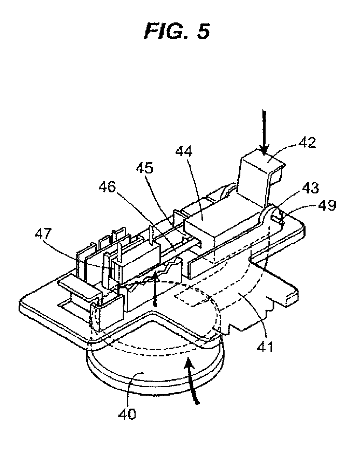

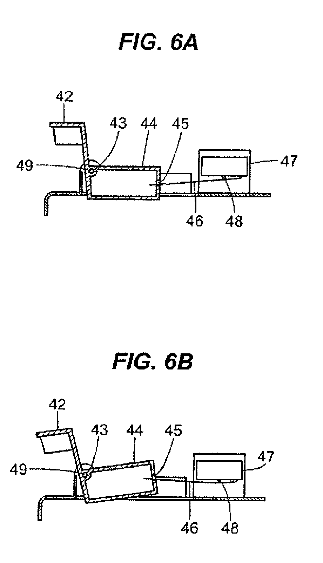

An improved float is also depicted in FIG. 4, and in greater detail in FIGS. 5 and 6. A float 40 (FIG. 5) is disposed in the collection tank 11. The float 40 is attached to one end of a removably connectable float arm 41 (FIG. 5), and a tab 42 is attached to the other end of the float arm 41. The tab 42 extends outside the pump housing 10. The float arm 41, which pivots about pivot point 43, has an attached extension 44 with a slot 45. The operating switch lever 46, passes through the slot 45 on one end, and is attached to an operating switch 47 on the other end. The operating switch 47 has an operating switch button 48 (FIGS. 6A and 6B), when pushed upwards, activates the motor 15. The float arm 41 is attached to the condensate pump by a fastener 49 that passes through the pivot point 43.

The float 40 communicates with the motor 15 such that when the float 40 is raised it activates the motor 15. The float 40 may be raised automatically when the condensate liquid reaches an upper level in the collection tank 11, or may be raised manually by pushing tab 42. Either way, when the float 40 is raised, the attached extension 44 with slot 45 is simultaneously raised, which in turn lifts the operating switch lever 46. When the operating switch lever 46 is raised, the operating switch button 48 is pushed upwards, thereby triggering the operating switch 47 and activating the motor 15. So, the float 40 provides a manual float activation device so that a user can manually activate the motor 15 before the condensate reaches the upper level. This allows the user to test the pump's operability, or to empty out the contents of the collection tank 11 at any given time.

While specific embodiments have been illustrate and described, numerous modifications may come to mind without significantly departing from the spirit of the invention, and the scope of protection is only limited by the scope of the accompanying claims.

## Claims

1. A condensate pump having a motor, a fan driven by the motor, a cover enclosing the fan, and a ventilation opening that allows for the intake of air into the cover, the cover comprising:
an exhaust opening adjacent to the fan;
a discharge outlet;
a throat defined by a space between the exhaust opening and the discharge outlet; and
a cutwater adjacent to the exhaust opening for focusing the air outward through the throat and exiting the cover via the discharge outlet.

2. The condensate pump of claim 1, wherein the motor rotates the fan in a direction that directs the air towards the throat.

3. The condensate pump of claim 1 or claim 2, wherein the fan is circular and has a fan radius, and the cover has an interior circular portion shaped around the fan, the interior circular portion of the cover having an inner radius greater than the fan radius.

4. The condensate pump of any one of claim 3, wherein the cutwater defines an end of the interior circular portion of the cover.

5. The condensate pump of claim 3 or claim 4, wherein the interior circular portion of the cover is shaped around at least 90 degrees of the fan.

6. The condensate pump of any one of claims 1 to 5, wherein the discharge outlet is in a plane angled relative to a wall of the cover defining the throat.

7. The condensate pump of any one of claims 1 to 6, wherein the ventilation opening is located on a side wall of the cover and proximate to the motor.

8. The condensate pump of any one of claims 1 to 7, wherein the throat and the ventilation opening are located on opposite sides of the fan.

9. The condensate pump of any one of claims 1 to 6, wherein the cover has a base, the ventilation opening being located at the base.

10. The condensate pump of any one of claims 1 to 9, further comprising a motor plate attached below the motor, the motor plate having at least one slit, and a volute casing attached below the motor plate via at least one hook that removably connects to the at least one slit, wherein the shaft extends through the motor plate and drives an impeller disposed in the volute casing, the impeller being used to expel condensate liquid in the pump.

11. A condensate pump comprising:
a motor;
a fan rotatably driven by the motor;
a cover enclosing the fan; and
a ventilation opening for permitting air to be drawn into the cover;
wherein the cover is shaped to define a volute to expel air outwardly through a discharge outlet.

12. The condensate pump of any one of claims 1 to 11, the pump having a pump housing, the pump housing enclosing the motor, a collection tank used to store condensate liquid, an impeller driven by the motor to discharge the condensate liquid, and a manual float activation device, the manual float activation device comprising:
a float disposed in the collection tank, the float communicating with the motor such that when the float is raised it activates the motor;
a float arm that is attached on one end to the main float; and
a tab that is attached on another end of the float arm, the tab extending outside the pump housing, wherein pushing the tab raises the main float.

13. The condensate pump of claim 12, further comprising:
an operating switch lever that activates the motor when engaged; and
a slot in an extension attached to the float arm whereby the slot is shifted when the tab is pushed, the operating switch lever passing through the slot and being engaged when the tab is pushed.

14. A condensate pump having a pump housing, the pump housing enclosing a motor, a collection tank used to store condensate liquid, an impeller driven by the motor to discharge the condensate liquid, and a manual float activation device, the manual float activation device comprising:
a float disposed in the collection tank, the float communicating with the motor such that when the float is raised it activates the motor;
a float arm that is attached on one end to the main float; and
a tab that is attached on another end of the float arm, the tab extending outside the pump housing, wherein pushing the tab raises the main float.

15. The condensate pump of claim 14, further comprising:
an operating switch lever that activates the motor when engaged; and
a slot in an extension attached to the float arm whereby the slot is shifted when the tab is pushed, the operating switch lever passing through the slot and being engaged when the tab is pushed.
